# EUROPÄISCHE PATENTSCHRIFT

(11) **EP 2 593 686 B1**
(45) Veröffentlichungstag und Bekanntmachung des Hinweises auf die Patenterteilung: **06.01.2016**
(21) Anmeldenummer: 11735632.9
(22) Anmeldetag: 13.07.2011
(51) Int. Cl.: F16C 29/04, F16C 33/46, F16C 33/54, B60N 2/07, B60N 2/08

(54) **FAHRZEUGSITZ MIT EINER LÄNGSVERSTELLVORRICHTUNG, DIE EINE SCHIENENFÜHRUNG UMFASST**
VEHICLE SEAT WITH A LONGITUDINAL ADJUSTMENT DEVICE COMPRISING A RAIL GUIDE
SIÈGE DE VÉHICULE AVEC UN DISPOSITIF DE RÉGLAGE LONGITUDINAL COMPORTANT UN GUIDE À RAILS

(30) Priorität: 16.07.2010 DE 102010027480
(43) Veröffentlichungstag der Anmeldung: 22.05.2013
(73) Patentinhaber: Johnson Controls GmbH, 51399 Burscheid (DE)
(72) Erfinder: WERNER, Hans-Georg, 40764 Langenfeld (DE); GROSS, Bernd, 40764Langenfeld (DE); HESTERBERG, Joshua, 40822 Mettmann (DE)
(74) Vertreter: Finger, Catrin
(86) Internationale Anmeldenummer: PCT/EP2011/061974
(87) Internationale Veröffentlichungsnummer: WO 2012/007513

(56) Entgegenhaltungen:
- DE-A1- 19 952 340
- DE-B- 1 158 766
- DE-C2- 2 715 640
- JP-A- 62 242 126
- JP-A- 2006 183 821
- US-A- 4 215 904

## Beschreibung

Die Erfindung betrifft einen Fahrzeugsitz gemäß den Merkmalen des Oberbegriffs des Anspruchs 1.

Schienenführungen dienen der Sitzverstellung nach vorne und hinten zur Positionierung des Insassen. Üblicherweise werden Schienen der Schienenführung aus Stahl gefertigt. Es sind aber auch Schienen aus Aluminium oder Aluminiumlegierungen bekannt.

Als Wälzkörper werden im Allgemeinen Stahlkugeln verwendet. Bei Aluminiumprofilschienen gepaart mit Wälzkörpern aus Stahlkugeln besteht die Gefahr, dass die Stahlkugeln Deformationen in den Führungsbahnen der Schienen, d.h. von Ober- und Unterschienen, verursachen (auch Brinellieren genannt). Dieses sogenannte Brinellieren wird durch eine zu hohe Flächenpressung hervorgerufen.

In der DE 199 52 340 A1 wird eine Fahrzeugsitzvorrichtung beschrieben, die durch eine Befestigungsvorrichtung an einer Fahrzeugstützstruktur befestigt ist. Die Befestigungsvorrichtung umfasst eine erste Schiene und eine zweite Schiene, die zur Bewegung relativ zu der ersten Schiene gehalten wird. Dadurch kann die Sitzvorrichtung von einem Insassen nach vorne oder nach hinten verstellt werden. Die erste Schiene hat ein durch einen ersten Basisabschnitt verbundenes erstes Paar von Seitenwänden, und die zweite Schiene hat ein durch einen zweiten Basisabschnitt verbundenes zweites Paar von Seitenwänden. Das erste Paar von Seitenwänden hat jeweils gegenüberliegende äußere Lagerflächen, und das zweite Paar von Seitenwänden hat jeweils gegenüberliegende innere Lagerflächen, die den äußeren Lagerflächen zugewandt sind, um einen Lagerkanal zwischen jedem der Paare von ersten und zweiten Seitenwänden zu bilden. Es ist ein Kugellagerelement in jeden der Lagerkanäle eingefügt und weist eine Lagerfläche zum Angriff an der inneren und der äußeren Lagerfläche auf. Das Lagerelement hat vier Kontaktpunkte zwischen dem Lagerelement und dem Lagerkanal, um eine stabile verstellbare Sitzschienenvorrichtung vorzusehen.

Aus der DE 27 15 640 C2 ist eine Gleitschienenführung für Fahrzeugsitze bekannt. Die Gleitschienenführung besteht aus zwei parallel zueinander angeordneten Gleitschienenpaaren, die jeweils aus einer führenden, am Fahrzeugsitz zu befestigenden Schiene und einer mit dieser zusammenwirkenden geführten am Fahrzeugboden zu befestigenden Schiene zusammengesetzt sind. Die beiden Schienen sind mittels Kugeln relativ zueinander beweglich gelagert.

Der Erfindung liegt die Aufgabe zugrunde, einen Fahrzeugsitz mit einer hinsichtlich der Flächenpressung verbesserten Längsverstellvorrichtung anzugeben.

Die Aufgabe wird durch die im Anspruch 1 angegebenen Merkmale gelöst.

Vorteilhafte Weiterbildungen der Erfindung sind Gegenstand der Unteransprüche.

Ein Fahrzeugsitz weist eine Längsverstellvorrichtung auf, welche zumindest eine Schienenführung mit zumindest einer Ober- und Unterschiene umfasst, die über ein Lager relativ zueinander bewegbar, insbesondere relativ zueinander linear verschiebbar gelagert sind. Erfindungsgemäß ist ein Rollenkäfig mit Rollen als Lager zwischen Ober- und Unterschiene vorgesehen, wobei in dem Rollenkäfig die Rollen in einem vorgegebenen Winkel zur horizontalen Ebene der Schienen geneigt angeordnet sind. Mit anderen Worten: Anstelle von herkömmlichen Stahlkugeln werden Rollen als Wälzkörper eingesetzt. Zur bedarfsweisen Sicherung des Fahrzeugsitzes sind die Ober- und Unterschiene zweckmäßigerweise durch eine Arretierung lösbar gegeneinander verriegelbar. Durch ein als Rollenkäfig ausgebildetes Lager mit in diesem geneigt angeordneten Rollen und daraus resultierenden Führungsbahnen in Ober- und Unterschiene werden auftretende Kräfte reduziert und die Kontaktfläche (Linienkontakt) der Rollen vergrößert, wodurch die auftretende Flächenpressung gegenüber herkömmlichen Schienensystemen mit Kugellagern deutlich reduziert ist.

Eine mögliche Ausführungsform sieht vor, dass die Rollen in einem Winkel in einem Bereich von 30° bis 60°, insbesondere von 40° bis 50° zur horizontalen Ebene der Schienen oder quer zur Laufrichtung der Schienen geneigt angeordnet sind. Vorzugsweise sind die Rollen im Rollenkäfig in einem Winkel von jeweils 45° zur horizontalen Ebene der Schienen oder quer zur Laufrichtung der Schienen geneigt angeordnet. Dies ermöglicht eine optimale Kräfteaufteilung.

In einer möglichen Ausführungsform sind die Rollen als drehbare, lang gestreckte, massive Körper mit kreisförmigem, z. B. rundem, Querschnitt ausgeführt und bestehen aus Stahl. Insbesondere sind die Rollen als zur Drehachse konzentrische kreiszylindrische Rollen ausgebildet. Die Rollen können in einer weiteren Ausführungsform eine ballige Form aufweisen. Hierzu weist die jeweilige Rolle variierende Durchmesser, insbesondere zu den Rollenenden abnehmende Durchmesser auf.

In einer weiteren alternativen Ausführungsform kann das Lager als ein Nadellager ausgebildet sein, welches als Rollen nadelförmige, d.h. extrem lange und dünne, Wälzkörper umfasst. Alternativ können die Rollen auf die Schienen abgestimmte Abmessungen aufweisen und beispielsweise als lange Rollen mit kleinem Durchmesser oder kurze Rollen mit großem Durchmesser ausgebildet sein.

Die Rollen sind in dem Rollenkäfig abwechselnd um 90° zueinander versetzt angeordnet. Alternativ können die Rollen parallel zueinander und somit gleichmäßig ausgerichtet im Rollenkäfig angeordnet sein.
In einer Weiterbildung der Erfindung sind der Rollenkäfig und die darin angeordneten Rollen in Abhängigkeit vom Profilquerschnitt der Schienenführung, insbesondere vom offenen und/oder geschlossenen Profil der Ober- und Unterschienen, unterschiedlich angeordnet. So ist beispielsweise eine zentrale oder mittige Position des Rollenkäfigs mit zwei außen liegenden Gleitern, insbesondere Kunststoffgleitern möglich. Alternativ können mindestens zwei oder mehr Rollenkäfige vorgesehen sein, die spiegelsymmetrisch, außen liegend, übereinander und/oder diagonal oder in einer anderen Anordnung zueinander angeordnet sind. Eine weitere Alternative sieht einen einseitigen Rollenkäfig mit gegenüberliegendem Gleiter, insbesondere Kunststoffgleiter vor. Ebenso ist ein Doppelroller mit Toleranzausgleich als auch eine dreifache Anordnung, d.h. drei Rollenkäfige, bei asymmetrischem Profilquerschnitt möglich.

Eine solche aus geneigten und versetzt zueinander angeordneten Rollen gebildete Führung führt zu einer Reduzierung der zulässigen Flächenpressung bei aus Aluminium gebildeten Schienen. Diese Rollenanordnung in Kombination mit unter 45° angebrachten Führungsbahnen sowohl in Oberals auch in der Unterschiene vergrößert den Kontakt der Rollen, insbesondere den Linienkontakt. Des Weiteren bewirkt die 45°-Anordnung eine gegenüber einer 90°-Anordnung gleichmäßige Kräfteaufteilung und -einleitung in die Unterschiene, wodurch Spannungen in den Führungsbahnen reduziert sind. Somit sind die auftretende Flächenpressung und auftretende mechanische Beanspruchungen sowie ein daraus möglicherweise resultierender Verschleiß gegenüber den bisherigen bekannten Schienensystemen deutlich reduziert.

Hierdurch können Leichtmetall-Legierungen zum Einsatz gelangen, die deutlich niedrigere Materialeigenschaften (hinsichtlich Festigkeiten) als zum Beispiel Stahl aufweisen.

Hierzu ist vorgesehen, dass Ober- und Unterschienen aus unterschiedlichem Material gefertigt sind, wobei eine der Schienen aus einem Leichtbaumaterial, insbesondere aus einer Leichtmetalllegierung und/oder einem Faserverbundwerkstoff hergestellt ist. Dies ermöglicht eine besonders leichte Schienenkonstruktion, wodurch das Gesamtgewicht des Sitzes deutlich reduziert ist. So kann durch Ersetzen von Stahlprofilen, durch beispielsweise Aluminiumprofile, für ein Schienenpaar das Gewicht pro Schienenpaar um 40% bis 50% reduziert werden.

Verschiedene Ausführungsformen sehen vor, dass die Ober- und/oder Unterschiene aus Aluminium, Magnesium, Stahl, Aluminiumlegierung, Magnesiumlegierung, kohlefaserverstärktem Kunststoff oder glasfaserverstärktem Kunststoff gefertigt sind bzw. ist. Bei einer aus einem Faserverbundwerkstoff gebildeten Schiene ist vorzugsweise zur Erhöhung der Festigkeit und zur Vermeidung von Brinelliereffekten mindestens ein Verstärkungselement, insbesondere ein metallisches Verstärkungselement, z. B. ein Draht oder umspritzte Elemente, integriert. Bevorzugt weisen die Schienen im Bereich des Rollenlagers (auch Rollenführung genannt) das integrierte Verstärkungselement auf. Dabei kann das Verstärkungselement nur über einen Teil der jeweiligen Schiene in diese oder über die gesamte Länge der Schiene nur im Bereich des Rollenlagers integriert sein.

Die Verwendung solcher Leichtmetall-Materialien, wie Aluminium oder Magnesium, ermöglicht zudem den Einsatz von Strangpressprofilen, wodurch die Herstellungskosten reduziert sind. Zudem können mittels der Verwendung von Strangpressprofilen aus Aluminium und/oder Magnesium in einfacher Art und Weise Schienen mit geschlossenem Profil vorgesehen sein.

Vorzugsweise ist zur Erzielung einer leichten und hinreichend festen Schienenkonstruktion eine der Schienen als geschlossenes und die andere als ein offenes Profil ausgebildet. Hierbei sind die beiden Schienen hinsichtlich der eingesetzten Materialien und/oder Abmessungen und/oder Formen aufeinander abgestimmt. Hierzu sieht eine Weiterbildung der Erfindung vor anstelle herkömmlicher Metallmaterialien Leichtmetalle, wie Aluminium und/oder Magnesium als Schienenmaterial zu verwenden, wodurch eine aus einem geschlossenen Profil und einem offenen Profil gebildete Schienenkonstruktion ermöglicht ist. Durch eine solche aus einem geschlossenen und einem offenen Profil gebildete Schienenkonstruktion ist eine gegenüber herkömmlichen Schienensystemen mit zwei offenen Profilen kompakte und leichte Anordnung gegeben. Alternativ können beide Schienen als ein offenes Profil, insbesondere als ein U-Profil ausgebildet sein.

Zur Reduzierung der Herstellungskosten durch Erhöhung der Anzahl gleicher Bauteile sind beide Schienen bevorzugt aus identischen, offenen Profilen gebildet.

Anhand der beigefügten schematischen Figuren wird die Erfindung näher beschrieben. Dabei zeigen:
- Fig. 1: schematisch im Querschnitt eine Ausführungsform einer Längsverstellvorrichtung,
- Fig. 2: schematisch in perspektivischer Darstellung in einem Rollenkäfig angeordnete Rollen,
- Fig. 3: schematisch im Querschnitt eine alternative Ausführungsform einer Längsverstellvorrichtung mit einer aus einer Oberschiene und einer Unterschiene gebildeten Schienenführung mit Rollen als Wälzkörper,
- Fig. 4: schematisch eine alternative Ausführungsform einer Längsverstellvorrichtung mit Schienenführung mit Rollen als Wälzkörper,
- Fig. 5: schematisch eine weitere alternative Ausführungsform einer Längsverstellvorrichtung mit einer Schienenführung mit Rollen als Wälzkörper,
- Fig. 6: schematisch eine weitere alternative Ausführungsform einer Längsverstellvorrichtung mit einer Schienenführung mit Rollen als Wälzkörper, und
- Fig. 7a bis 7c: schematisch weitere alternative Ausführungsformen für eine Längsverstellvorrichtung.

Einander entsprechende Teile sind in allen Figuren mit den gleichen Bezugszeichen versehen.

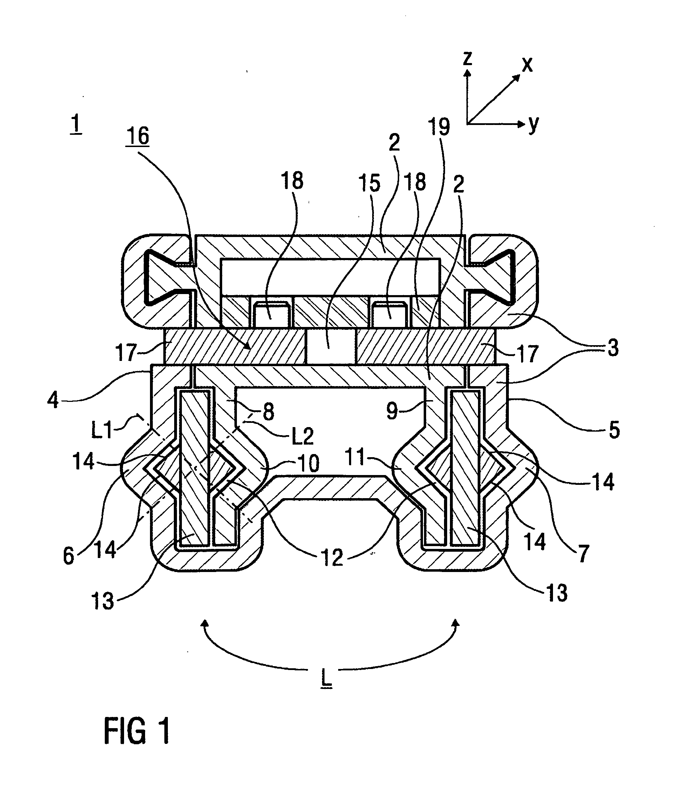

Die Figur 1 zeigt schematisch im Querschnitt eine Ausführungsform einer Längsverstellvorrichtung mit einer Schienenführung 1 aus einer Oberschiene 2 und einer Unterschiene 3. Die Schienenführung 1 dient beispielsweise als Längsführung für einen nicht näher dargestellten Fahrzeugsitz. Dabei weist der Fahrzeugsitz beispielsweise zwei Schienenführungen 1 für dessen Längsverschiebung auf.

In dieser Ausführungsform nach Figur 1 umgreift die Unterschiene 3 die Oberschiene 2 seitlich und von unten. Die Unterschiene 3 weist ein offenes Profil mit einem nahezu U-förmigen Profilquerschnitt mit zwei Außenschenkeln 4 und 5 auf. Die Außenschenkel 4 und 5 des U-Profils sind mit von der Oberschiene 2 weg nach außen gerichteten Ausformungen 6 bzw. 7 versehen.

Die Oberschiene 2 ist mittig in die Öffnung der Unterschiene 3 bewegbar angeordnet. Die Oberschiene 2 weist einen Profilquerschnitt mit Innenschenkeln 8 und 9 auf.

Korrespondierend zu den Ausformungen 6 und 7 der Außenschenkel 4 bzw. 5 der Unterschiene 3 weisen die Innenschenkel 8 und 9 der Oberschiene 2 den Ausformungen 6 und 7 gegenüberliegende und von der Unterschiene 3 weg nach innen gerichtete Ausformungen 10 bzw. 11 auf, so dass je Schenkelpaar 4 und 8 oder 5 und 9 jeweils ein Längskanal 12 gebildet ist, dessen Querschnitt rechtwinklig, vorzugsweise nahezu quadratisch ist, wobei das Quadrat symmetrisch auf einer Ecke stehend angeordnet ist.

In dem jeweiligen Längskanal 12 sind zur Längsführung der Schienen 2 und 3 Lager L Rollenkäfige 13 mit Rollen 14 als Wälzkörper angeordnet. Die Rollen 14 sind in den Rollenkäfigen 13 gehalten, welcher im Längskanal 12 verschiebbar, insbesondere gleitbar ist.

Die Rollen 14 sind im Rollenkäfig 13 abwechselnd um 90° versetzt zueinander angeordnet, so dass die Wälzfläche der Rollen 14 alternierend auf der unteren Fläche der Ausformung 7 und der unteren Fläche der Ausformung 11 bzw. der unteren Fläche der Ausformung 6 und der unteren Fläche der Ausformung 10 laufen und jeweils ein Rollenspiel in Richtung der oberen Fläche der Ausformung 7 und der oberen Fläche der Ausformung 11 bzw. der oberen Fläche der Ausformung 6 und der oberen Fläche der Ausformung 10 gebildet ist. Hierdurch ist ein Toleranzausgleich in radialer Richtung, insbesondere in Y- und/oder Z-Richtung ermöglicht.

Diese wechselnde Anordnung der Rollen 14 ist in Figur 1 durch die Darstellung der Längsachsen L1, L2 der Rollen 14 angedeutet.

In dem von der Unterschiene 3 abgewandten oberen Bereich der Oberschiene 2 ist eine Ausklinkung 15 eingebracht, in welche ein Verriegelungselement 16 angeordnet ist. Das Verriegelungselement 16 weist zwei zueinander beweglich angeordnete Rastnasen 17 auf, die (in einander gegenüberliegenden und zueinander) korrespondierenden Ausnehmungen in der Oberschiene 2 und der Unterschiene 3 zur Verriegelung dieser eingreifen. Mit anderen Worten: Mittels des Verriegelungselements 16 sind die Ober- und Unterschiene 2, 3 lösbar gegeneinander verriegelbar.

Zum Lösen der Verriegelung und damit zur Längsverschiebung der Schienen 2 und 3 zueinander weist das Verriegelungselement 16 von den Rastnasen 17 senkrecht nach oben abstehende Stifte 18 auf, in welche ein Entriegelungsschieber 19 eingreift. Durch Einschieben des Entriegelungsschiebers 19 werden die Rastnasen 17 aufeinander zu bewegt, so dass diese aus den Ausnehmungen von Ober- und Unterschiene 2, 3 hinaus bewegt werden, wodurch eine Längsverschiebung von Ober- und Unterschiene 2, 3 ermöglicht ist.

Durch Ausschieben des Entriegelungsschiebers 19 bewegen sich die Rastnasen 17 voneinander weg, so dass diese wieder in die Ausnehmungen von Ober- und Unterschiene 2, 3 eingreifen und eine Längsverschiebung dieser blockiert ist. Für eine sichere Verriegelung der Rastnasen 17 in den Ausnehmungen der Ober- und Unterschiene 2, 3 sind die Rastnasen 17 federgespannt zueinander angeordnet.

Figur 1 zeigt die Schienenführung 1 mit einer Ober- und Unterschiene 2, 3, die zwei außen liegende Führungen in den Längskanälen 12 aufweisen.

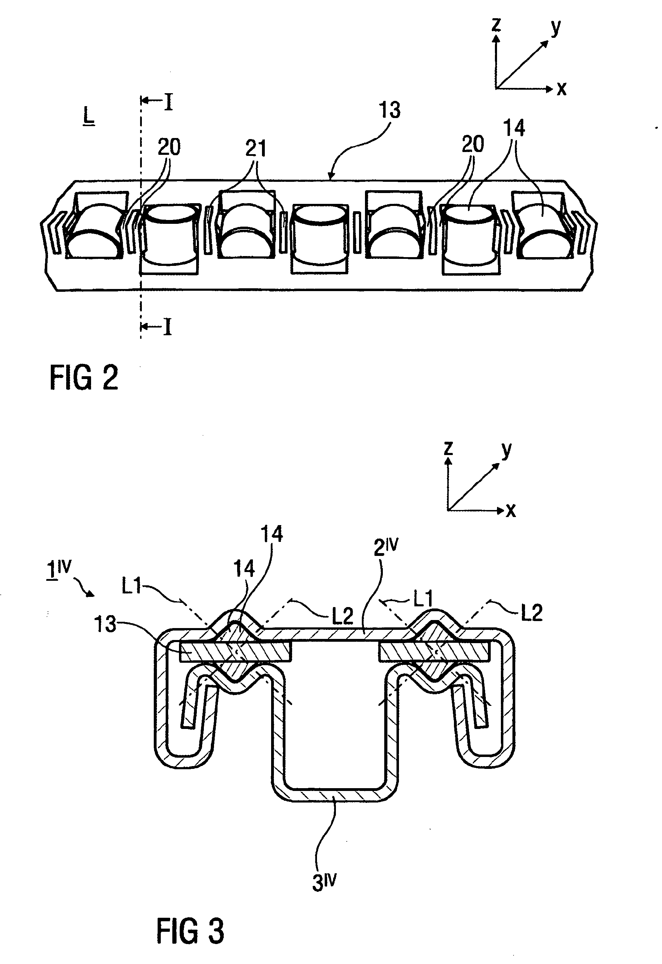

Figur 2 zeigt schematisch in perspektivischer Darstellung ein Ausführungsbeispiel eines Rollenkäfigs 13 mit darin angeordneten Rollen 14 eines Lagers L. Die Längsachsen L1, L2 der Rollen 14 sind alternierend um 90° zueinander versetzt angeordnet, so dass diese zwei, insbesondere v-förmige Führungsbahnen bilden. Die Rollen 14 sind um 45°gegenüber der Hauptgeometrie des Rollenkäfigs 13 geneigt in diesem angeordnet, so dass dieses stehend im Längskanal 12 der Schienenführung 1 angeordnet werden kann.

Hierdurch ist bedingt durch die größeren Auflageflächen die auftretende Flächenpressung deutlich reduziert, so dass Brinelliereffekte weitgehend vermieden sind.

Alternativ können die Rollen 14 in nicht näher dargestellter Art und Weise parallel zueinander und somit gleichmäßig ausgerichtet im Rollenkäfig 13 angeordnet sein. Dabei können die Rollen 14 in einem anderen vorgegebenen Winkel zur horizontalen Ebene oder quer zur Laufrichtung der Schienen 2, 3 geneigt angeordnet sein.

Alternativ können die Rollen 14 in einem Winkel in einem Bereich von 30° bis 60°, insbesondere von 40° bis 50° geneigt im Rollenkäfig 13 angeordnet sein.

Für einen im Wesentlichen symmetrischen Aufbau des Rollenkäfigs 13 und des Längskanals 12, mit einem nahezu quadratischen Querschnitt, weisen die Rollen 14 eine Länge auf, die im Wesentlichen dem Durchmesser der Rollen 14 entspricht. Sie können aber auch andere Abmessungen aufweisen. Beispielsweise können die Rollen eine größere Länge als deren Durchmesser aufweisen. Auch können die Rollen eine ballige Form aufweisen, wobei die Rollen hierbei einen variierenden Durchmesser, insbesondere zu den Rollenenden hin abnehmende Durchmesser aufweisen.

Die Rollen 14 sind im Rollenkäfig 13 voneinander durch Trennwände 20 getrennt angeordnet und in daraus resultierenden Kammern 21 drehbar gelagert.

Die Rollen 14 bestehen aus Stahl und sind somit kostengünstig. Auch können zur Reduzierung oder Vermeidung von Kontaktkorrosion beschichtete Stahlrollen verwendet werden. Alternativ können diese aus Kunststoff oder faserverstärktem Kunststoff gebildet sein, so dass keine Kontaktkorrosion auftritt. Auch können die Rollen 14 in einer weiteren Alternative aus einem weichen Kunststoff gebildet sein, wodurch die Rollen 14 dämpfend und Toleranz ausgleichend wirken.

Die Rollen 14 sind als Zylinderrollen ausgeführt und bilden im Rollenkäfig 13 angeordnet ein Zylinderrollenlager zur Führung der Schienen 2 und 3.

Alternativ können die Rollen 14 als sogenannte Nadelrollen und das Lager L als Nadellager ausgebildet sein.

Die hier beschriebenen verschiedenen Materialausführungen und/oder Konturen und/oder Querschnitte der Rollen 14 sind für alle nachfolgend beschriebenen alternativen Längsverstelleinrichtungen einsetzbar.

Der Rollenkäfig 13 besteht bevorzugt aus Kunststoff, insbesondere aus Polymer.

Das Lager L kann darüber hinaus derart ausgebildet sein, dass in nicht näher dargestellter Art und Weise die Rollen im Rollenkäfig in einem vorgegebenen Winkel insbesondere von jeweils 45° quer zur Laufrichtung der Schienen geneigt angeordnet sind. Eine weitere nicht gezeigte Alternative sieht vor, dass der Rollenkäfig und die darin angeordneten Rollen in Abhängigkeit vom Profilquerschnitt der Schienenführung, insbesondere vom Querschnitt oder Profil von Ober- und Unterschiene, unterschiedlich angeordnet sind. So ist beispielsweise eine zentrale oder mittige Position des Rollenkäfigs mit zwei außen liegenden Gleitern, insbesondere Kunststoffgleitern möglich. Alternativ können zwei Rollenkäfige vorgesehen sein, die spiegelsymmetrisch, außen liegend und/oder diagonal zueinander angeordnet sind. Weitere Alternativen sehen einen einseitigen Rollenkäfig mit gegenüberliegendem Kunststoffgleiter oder einen Doppelroller mit Toleranzausgleich vor. Auch eine mehrfache, insbesondere dreifache Anordnung, d.h. drei Rollenkäfige, bei asymmetrischem Profilquerschnitt sind möglich.

Figur 3 zeigt schematisch eine alternative Längsverstellvorrichtung mit einer Schienenführung 1^{IV}, wobei Ober- und Unterschiene 2^{IV}, 3^{IV} jeweils als offenes Profil ausgebildet sind. Dabei weisen die Ober- und Unterschiene 2^{IV}, 3^{IV} an deren Oberseiten parallel zueinander verlaufende Führungsbahnen auf, wobei in durch Auswölbungen in den Schienen 2^{IV}, 3^{IV} gebildeten Hohlräumen die Rollenkäfige 13 angeordnet sind, so dass diese parallel nebeneinander im Bereich der Oberseite der Schienenführung 1^{IV} angeordnet sind.

Zur sicheren Führung einer der Schienen 2^{IV}, 3^{IV}, insbesondere der Oberschiene 2^{IV} auf der anderen ortsfesten Schiene, insbesondere der Unterschiene 3^{IV} umgreift die Oberschiene 2^{IV} die Unterschiene 3^{IV}.

Die beschriebenen Ober- und Unterschienen 2, 3 oder 2^{IV}, 3^{IV} und die Schienen 2^{I} bis 2^{III}, 3^{I} bis 3^{III} der nachfolgenden alternativen Ausführungen können aus unterschiedlichem Material gefertigt sein, wobei eine der Schienen aus einem Leichtbaumaterial, insbesondere aus einer Leichtmetalllegierung und/oder einem Faserverbundwerkstoff, insbesondere glasfaserverstärktem oder kohlefaserverstärktem Kunststoff mit oder ohne Verstärkungselement gebildet ist. Das Verstärkungselement ist dabei bevorzugt im Bereich des Lagers L in den Schienen 2, 3 integriert. Sind die aus einem Leichtbaumaterial gefertigten Schienen 2, 3 mit einem solchen Verstärkungselement versehen, kann anstelle eines Rollenlagers auch ein Kugellager eingesetzt werden.

Die Schienen können aus Leichtmetallblechen beispielsweise aus Aluminium oder Magnesium und/oder Stahlblechen oder anderen Leichtmetalllegierungen gefertigt sein. Vorzugsweise sind die Schienen aus extrudierten Strangpressprofilen gefertigt.

Zur Erzielung einer hinreichenden Festigkeit der Längsverstellvorrichtung bei zumindest einer der Schienen 2^{I bis IV}, 3^{I bis IV} aus einem Leichtbaumaterial weisen diese unterschiedliche Profilquerschnitte auf, insbesondere weist eine der Schienen 2^{I bis IV}, 3^{I bis IV} ein geschlossenes Profil und die andere Schiene 2^{I bis IV}, 3^{I bis IV} ein offenes, das geschlossene Profil umgreifendes Profil auf.

Figuren 3, 4 und 6 zeigen dabei eine die jeweilige Unterschiene 3^{IV}, 3^{I}, 3^{III} mit geschlossenem Profil und somit den inneren Raum abdeckende Anordnung der Oberschiene 2^{IV}, 2^{I}, 2^{III} mit offenem Profil, insbesondere einseitig offenem Profil.

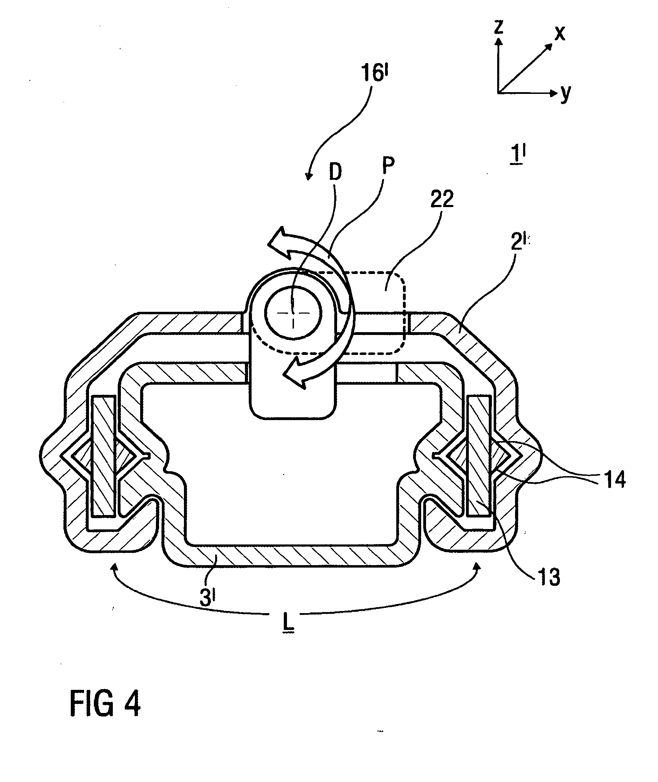

Figur 4 zeigt schematisch eine alternative Ausführungsform einer Längsverstellvorrichtung mit einer alternativen Schienenführung 1^{I} mit Rollen 14 als Wälzkörper.

Das Lager L aus Rollen 14 und Rollenkäfig 13 ist analog zur Ausführungsform nach Figuren 1 und 2 ausgebildet.

Die Schienenführung 1^{I} unterscheidet sich von der Schienenführung 1 nach Figur 1 in einer alternativen Querschnittsform der Schienen 2^{I} und 3^{I} und daraus resultierend einer alternativen Form eines Verriegelungselements 16^{I}.

Die Unterschiene 3^{I} ist als ein Hohlprofilkörper ausgeführt, auf welchen eine im Wesentlichen U-förmige Oberschiene 2^{I} die Unterschiene 3^{I} zumindest teilweise umgreifend angeordnet ist.

Das Verriegelungselement 16^{I} ist als ein Dreharm 22 ausgeführt, der drehbar um eine Drehachse D in der Oberschiene 2^{I} gelagert ist. Durch entsprechende Drehung des Dreharms 22 in Richtung des Pfeils P greift der Dreharm 22 in eine Ausnehmung der Unterschiene 3^{I} ein, so dass die beiden Schienen 2^{I} und 3^{I} blockiert sind. Durch Drehung des Dreharms 22 in umgekehrter Richtung wird dieser in eine Ausnehmung der Oberschiene 2^{I} derart gehalten, dass die Schienen 2^{I} und 3^{I} zueinander verschiebbar sind.

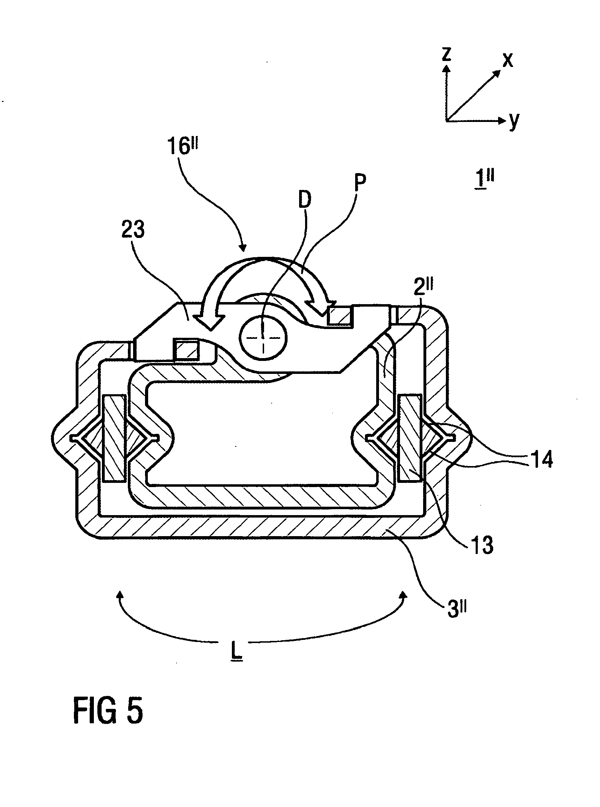

Figur 5 zeigt schematisch eine weitere alternative Ausführungsform einer Längsverstellvorrichtung mit einer Schienenführung 1^{II} mit Rollen 14 als Wälzkörper.

Die Unterschiene 3" (= Außenschiene) ist im Wesentlichen als ein offenes U-förmiges, ortsfestes Schienenprofil ausgeführt, in welches die als ein geschlossener Hohlprofilkörper ausgebildete Oberschiene 2^{II} (= Innenschiene) bewegbar angeordnet ist.

Das Verriegelungselement 16" ist als ein zweiarmiger Drehhebel 23 ausgeführt, der drehbar um eine Drehachse D in der Unterschiene 3" gelagert ist. Durch entsprechende Drehung des Drehhebels 23 in Richtung des Pfeils P greift der Drehhebel 23 in Ausnehmungen der Oberschiene 2" ein, so dass die beiden Schienen 2" und 3" blockiert sind. Durch Drehung des Drehhebels 23 in umgekehrter Richtung wird dieser aus den Ausnehmungen herausbewegt und derart gehalten, dass die Schienen 2" und 3" zueinander frei verschiebbar sind.

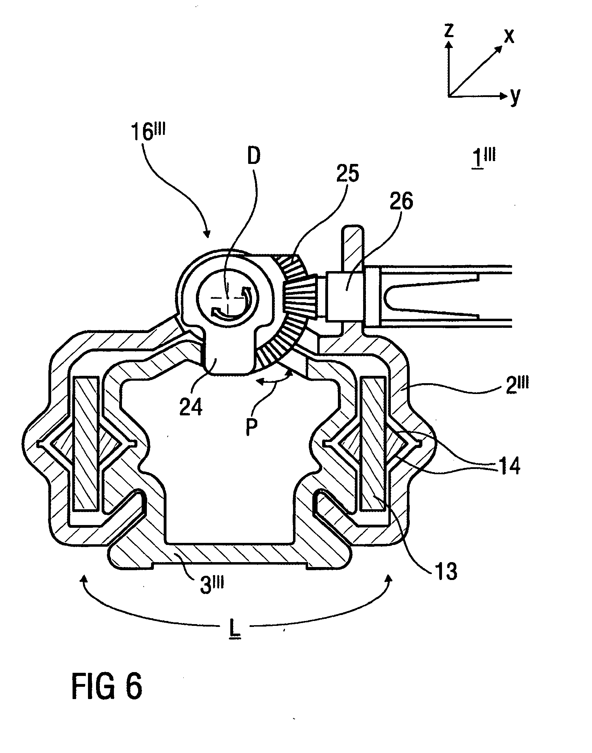

Figur 6 zeigt schematisch eine weitere alternative Ausführungsform einer Längsverstellvorrichtung mit einer Schienenführung 1^{III} mit Rollen 14 als Wälzkörper.

Die Unterschiene 3^{III} ist als ein geschlossener Hohlprofilkörper ausgeführt, auf welchen eine im Wesentlichen offene, U-förmige Oberschiene 2^{III}, die Unterschiene 3^{III} zumindest teilweise umgreifend, angeordnet ist.

Das Verriegelungselement 16^{III} ist als ein Drehhaken 24 ausgeführt, der mittels eines Kegelrades 25 um eine Drehachse D drehbar in der Oberschiene 2^{III} gelagert ist.

Das Kegelrad 25 wird von einer Welle 26 angetrieben. Durch entsprechende Drehung des Kegelrades 25 wird der Drehhaken 24 in Richtung des Pfeils P gedreht, wodurch der Drehhaken 24 in eine Ausnehmung der Unterschiene 3^{III} eingreift, so dass die beiden Schienen 2^{III} und 3^{III} blockiert sind. Durch Drehung des Drehhakens 24 in umgekehrter Richtung wird dieser aus der Ausnehmung der Unterschiene 2^{III} bewegt und derart gehalten, dass die Schienen 2^{III} und 3^{III} zueinander frei verschiebbar sind.

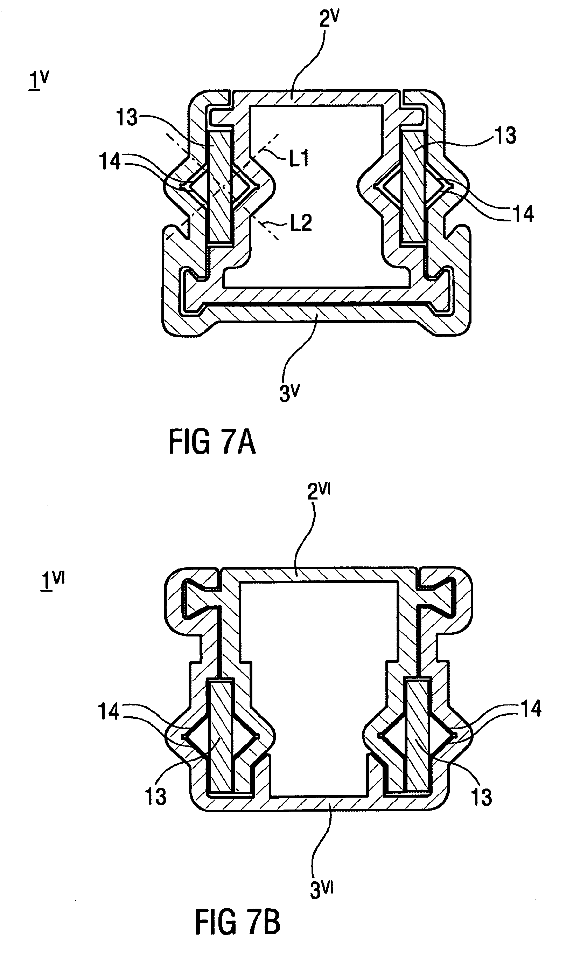

Figuren 7A bis 7C zeigen weitere alternative Ausführungsformen für eine Längsverstellvorrichtung.

Figur 7A zeigt eine Schienenführung 1^{V} mit einer als bewegliche Innenschiene mit geschlossenem Profil ausgebildeten Oberschiene 2^{V} und einer ortsfesten als Außenschiene mit offenem, u-förmigem Profil ausgebildeten Unterschiene 3^{V}. Dabei sind die Rollenkäfige 13 einander gegenüberliegend in den Längsseiten der Schienenführung 1^{V} angeordnet.

Figur 7B zeigt eine weitere alternative Schienenführung 1^{VI}. Dabei sind beide Schienen 2^{VI}, 3^{VI} als offene, u-förmige Profile ausgebildet, wobei diese mit dem offenen Ende zueinander und somit ineinander angeordnet sind. Die Rollenkäfige 13 sind einander gegenüberliegend in den Längsseiten der Schienenführung 1^{VI} angeordnet.

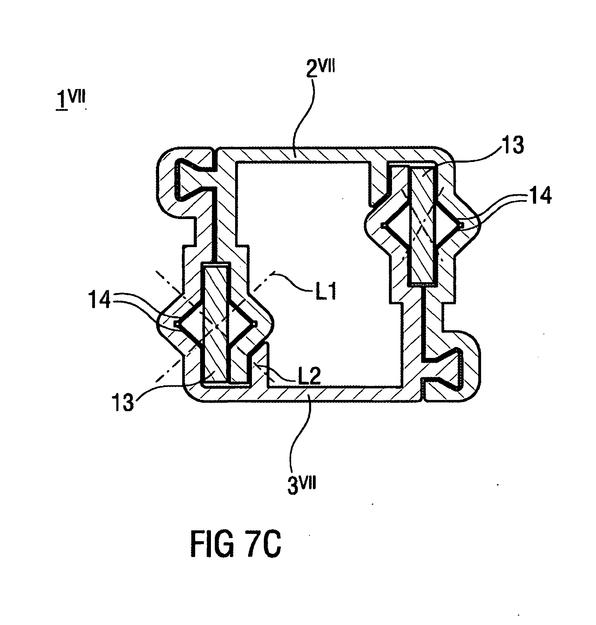

Figur 7C zeigt eine weitere alternative Schienenführung 1^{VII}. Die beiden Schienen 2^{VII} und 3^{VII} sind identische offene, u-förmige Profile, die ineinander gesteckt angeordnet sind. Die Rollenkäfige 13 sind diagonal einander gegenüberliegend in den Längsseiten der Schienenführung 1^{VII} angeordnet.

### Bezugszeichenliste

- 1, 1^{I} bis 1^{VII}: Schienenführung
- 2, 2^{I} bis 2^{III}: Oberschiene
- 3, 3^{I} bis 3^{III}: Unterschiene
- 4: Außenschenkel der Unterschiene
- 5: Außenschenkel der Unterschiene
- 6: Ausformung im Unterschenkel 4 der Unterschiene
- 7: Ausformung im Unterschenkel 5 der Unterschiene
- 8: Innenschenkel der Oberschiene
- 9: Innenschenkel der Oberschiene
- 10: Ausformung im Innenschenkel 8 der Oberschiene
- 11: Ausformung im Innenschenkel 9 der Oberschiene
- 12: Längskanal
- 13: Rollenkäfig
- 14: Rollen
- 15: Ausklinkung
- 16, 16^{I} bis 16^{III}: Verriegelungselement
- 17: Rastnasen
- 18: Stifte
- 19: Entriegelungsschieber
- 20: Trennwände
- 21: Kammern
- 22: Dreharm
- 23: Drehhebel
- 24: Drehhaken
- 25: Kegelrad
- 26: Welle
- L1, L2: Längsachse
- L: Lager
- P: Pfeil
- D: Drehachse

## Patentansprüche

1. Fahrzeugsitz mit einer Längsverstellvorrichtung, welche mindestens eine Schienenführung (1 bis 1^{VII}) mit zumindest einer Oberschiene (2 bis 2^{VII}) und einer Unterschiene (3 bis 3^{VII}) umfasst, wobei Oberschiene (2 bis 2^{VII}) und Unterschiene (3 bis 3^{VII}) über ein Lager (L) relativ zueinander bewegbar gelagert sind,
**dadurch gekennzeichnet, dass** das Lager (L) als ein Rollenkäfig (13) mit Rollen (14) ausgebildet und zwischen Oberschiene (2 bis 2^{VII}) und Unterschiene (3 bis 3^{VII}) angeordnet ist, wobei die Rollen (14) in dem Rollenkäfig (13) in einem vorgegebenen Winkel zur horizontalen Ebene der Schienen (2 bis 2^{VII}, 3 bis 3^{VII}) geneigt angeordnet sind.

2. Fahrzeugsitz nach Anspruch 1,
**dadurch gekennzeichnet, dass** die Rollen (14) in einem Winkel in einem Bereich von 30° bis 60°, insbesondere von 40° bis 50°, insbesondere in einem Winkel von jeweils 45° zur horizontalen Ebene der Schienen (2 bis 2^{VII}, 3 bis 3^{VII}) oder quer zur Laufrichtung der Schienen (2 bis 2^{VII}, 3 bis 3^{VII}) geneigt angeordnet sind.

3. Fahrzeugsitz nach Anspruch 1 oder 2,
**dadurch gekennzeichnet, dass** in dem Rollenkäfig (13) eine Folge von Rollen (14) als drehbare, lang gestreckte Wälzkörper mit kreisförmigem Querschnitt und/oder mit variierenden Durchmessern, insbesondere abnehmenden Durchmessern zu den Körperenden angeordnet sind.

4. Fahrzeugsitz nach Anspruch 1 oder 2,
**dadurch gekennzeichnet, dass** das Lager (L) als ein Nadellager ausgebildet ist, welches als Rollen (14) nadelförmige Wälzkörper umfasst.

5. Fahrzeugsitz nach einem der vorhergehenden Ansprüche 1 bis 4,
**dadurch gekennzeichnet, dass** die Rollen (14) in dem Rollenkäfig (13) abwechselnd um 90° zueinander versetzt angeordnet sind.

6. Fahrzeugsitz nach einem der vorhergehenden Ansprüche 1 bis 4,
**dadurch gekennzeichnet, dass** die Rollen (14) in dem Rollenkäfig (13) parallel zueinander angeordnet sind.

7. Fahrzeugsitz nach einem der vorhergehenden Ansprüche,
**dadurch gekennzeichnet, dass** der Rollenkäfig (13) und die darin angeordneten Rollen (14) in Abhängigkeit vom Profilquerschnitt der Schienenführung (1 bis 1^{VII}) unterschiedlich angeordnet sind.

8. Fahrzeugsitz nach Anspruch 7,
**gekennzeichnet durch** eine zentrale oder mittige Position des Rollenkäfigs (13) mit zwei außen liegenden Gleitern, insbesondere Kunststoffgleitern.

9. Fahrzeugsitz nach Anspruch 7,
**gekennzeichnet durch** mindestens zwei Rollenkäfige (13), die spiegelsymmetrisch, außen liegend, übereinander und/oder diagonal zueinander angeordnet sind.

10. Fahrzeugsitz nach Anspruch 7,
**gekennzeichnet durch** einen einseitigen Rollenkäfig (13) mit gegenüberliegendem Gleiter, insbesondere Kunststoffgleiter.

## Claims

1. Vehicle seat having a longitudinal adjustment device which comprises at least one rail guide (1 to 1^{VII}) with at least one upper rail (2 to 2^{VII}) and a lower rail (3 to 3^{VII}), wherein the upper rail (2 to 2^{VII}) and the lower rail (3 to 3^{VII}) are mounted movably in relation to one another via a bearing (L),
**characterized in that** the bearing (L) is in the form of a roller cage (13) with rollers (14) and is arranged between the upper rail (2 to 2^{VII}) and the lower rail (3 to 3^{VII}), wherein the rollers (14) are arranged in the roller cage (13) inclined at a predefined angle in relation to the horizontal plane of the rails (2 to 2^{VII}, 3 to 3^{VII}).

2. Vehicle seat according to Claim 1,
**characterized in that** the rollers (14) are arranged inclined at an angle in a range of 30° to 60°, in particular of 40° to 50°, in particular at an angle of in each case 45°, in relation to the horizontal plane of the rails (2 to 2^{VII}, 3 to 3^{VII}) or transversely in relation to the running direction of the rails (2 to 2^{VII}, 3 to 3^{VII}).

3. Vehicle seat according to Claim 1 or 2,
**characterized in that** a sequence of rollers (14) are arranged in the roller cage (13) as rotatable, elongated rolling bodies with a circular cross section and/or with varying diameters, in particular diameters which decrease toward the body ends.

4. Vehicle seat according to Claim 1 or 2,
**characterized in that** the bearing (L) is in the form of a needle bearing, which comprises needle-shaped rolling bodies as the rollers (14).

5. Vehicle seat according to one of the preceding Claims 1 to 4,
**characterized in that** the rollers (14) are arranged in the roller cage (13) alternately offset by 90° in relation to one another.

6. Vehicle seat according to one of the preceding Claims 1 to 4,
**characterized in that** the rollers (14) are arranged in the roller cage (13) parallel to one another.

7. Vehicle seat according to one of the preceding claims,
**characterized in that** the roller cage (13) and the rollers (14) arranged therein are arranged differently depending on the profile cross section of the rail guide (1 to 1^{VII}).

8. Vehicle seat according to Claim 7,
**characterized by** a central or concentric position of the roller cage (13) with two external slides, in particular plastic slides.

9. Vehicle seat according to Claim 7,
**characterized by** at least two roller cages (13), which are arranged mirror-symmetrically, externally, one above another and/or diagonally in relation to one another.

10. Vehicle seat according to Claim 7,
**characterized by** a one-sided roller cage (13) with an opposing slide, in particular a plastic slide.

## Revendications

1. Siège de véhicule comprenant un dispositif de réglage longitudinal, qui comprend au moins un guidage sur rails (1 à 1^{VII}) avec au moins un rail supérieur (2 à 2^{VII}) et un rail inférieur (3 à 3^{VII}), le rail supérieur (2 à 2^{VII}) et le rail inférieur (3 à 3^{VII}) étant supportés de manière déplaçable l'un par rapport à l'autre par le biais d'un palier (L), **caractérisé en ce que** le palier (L) est réalisé sous forme de cage de roulement (13) avec des rouleaux (14) et est disposé entre le rail supérieur (2 à 2^{VII}) et le rail inférieur (3 à 3^{VII}), les rouleaux (14) étant disposés de manière inclinée dans la cage de roulement (13) suivant un angle prédéfini par rapport au plan horizontal des rails (2 à 2^{VII}, 3 à 3^{VII}).

2. Siège de véhicule selon la revendication 1, **caractérisé en ce que** les rouleaux (14) sont disposés de manière inclinée suivant un angle compris dans une plage de 30° à 60°, en particulier de 40° à 50°, notamment suivant un angle de 45° respectivement par rapport au plan horizontal des rails (2 à 2^{VII}, 3 à 3^{VII}), ou transversalement à la direction de roulement des rails (2 à 2^{VII}, 3 à 3^{VII}).

3. Siège de véhicule selon la revendication 1 ou 2, **caractérisé en ce qu'**une série de rouleaux (14) sont disposés dans la cage de roulement (13) sous forme de corps de roulement rotatifs, allongés, de section transversale circulaire et/ou de diamètres variables, en particulier de diamètres diminuant vers les extrémités des corps.

4. Siège de véhicule selon la revendication 1 ou 2, **caractérisé en ce que** le palier (L) est réalisé sous forme de palier à aiguilles, qui comprend des corps de roulement en forme d'aiguilles en tant que rouleaux (14).

5. Siège de véhicule selon l'une quelconque des revendications 1 à 4, **caractérisé en ce que** les rouleaux (14) sont disposés dans la cage de roulement (13) de manière décalée les uns par rapport aux autres en alternance de 90°.

6. Siège de véhicule selon l'une quelconque des revendications 1 à 4, **caractérisé en ce que** les rouleaux (14) sont disposés parallèlement les uns aux autres dans la cage de roulement (13).

7. Siège de véhicule selon l'une quelconque des revendications précédentes, **caractérisé en ce que** la cage de roulement (13) et les rouleaux (14) disposés dans celle-ci sont disposés différemment en fonction de la section transversale de profilé du guidage sur rails (1 à 1^{VII}).

8. Siège de véhicule selon la revendication 7, **caractérisé par** une position centrale ou médiane de la cage de roulement (13) avec deux coulisseaux situés à l'extérieur, en particulier des coulisseaux en plastique.

9. Siège de véhicule selon la revendication 7, **caractérisé par** au moins deux cages de roulement (13) qui sont disposées l'une par rapport à l'autre avec une symétrie spéculaire, à l'extérieur, l'une au-dessus de l'autre et/ou en diagonale.

10. Siège de véhicule selon la revendication 7, **caractérisé par** une cage de roulement d'un côté (13) avec un coulisseau opposé, notamment un coulisseau en plastique.
